# EUROPÄISCHE PATENTANMELDUNG

(11) **EP 4 796 791 A1**
(43) Veröffentlichungstag der Anmeldung: **26.08.2026**
(21) Anmeldenummer: 25159899.1
(22) Anmeldetag: 25.02.2025
(51) Int. Cl.: F04D 29/02, F04D 29/42, F16L 41/08, B29C 49/20

(54) **ANORDNUNG FÜR EINE TEMPERIEREINRICHTUNG**

(71) Anmelder: TI Automotive Technology Center GmbH, 76437 Rastatt (DE)
(72) Erfinder: Kizilay, Irfan, 68799 Reilingen (DE); Lindow, Manuel, 76593 Gernsbach (DE); Leipold, Stefan, 67470 Seltz (FR); Roeder, Manuel, 76437 Rastatt (DE)
(74) Vertreter: Reiser & Partner Patentanwälte mbB

(57) **Zusammenfassung**

Anordnung (1) für eine Temperiereinrichtung, umfassend zumindest einen blasgeformten Grundkörper (2) und zumindest ein Funktionselement (3), wobei das Funktionselement (3) stoffschlüssig mit dem Grundkörper (2) verbunden ist, wobei das Funktionselement (3) ein Verbundbauteil ist und zumindest einen ersten Bereich (4) aus einem ersten Material und einen zweiten Bereich (5) aus einem zweiten Material aufweist.

## Beschreibung

Die Erfindung betrifft eine Anordnung für eine Temperiereinrichtung, umfassend zumindest einen blasgeformten Grundkörper und zumindest ein Funktionselement, wobei das Funktionselement stoffschlüssig mit dem Grundkörper verbunden ist.

Derartige Anordnungen werden bspw. in Elektrofahrzeugen eingesetzt und dienen dem Transport von Temperiermedien in Richtung der Komponenten des Elektrofahrzeugs, um diese je nach Anforderung zu erwärmen oder zu kühlen. Hierzu kann die Antriebseinheit eines Elektrofahrzeugs mit einem Temperierkreislauf ausgerüstet sein, durch dessen Rohranordnung ein Temperiermedium zu den Zellen der Batterie geleitet werden kann, um die Komponenten der Antriebseinheit, insbesondere die Batterien, innerhalb eines gewünschten Temperaturspektrums zu temperieren. Weitere zu temperierende Komponenten können neben den Batterien die Leistungselektronik und der Elektromotor sein. Im Zusammenhang mit Schnellladevorgängen kommt auch eine Temperierung der Ladeelektronik und der dazugehörigen Steckverbindungen und Leitungen in Betracht. Ein Bedarf kann sich auch im Bereich der übrigen Fahrzeugelektronik ergeben, bspw. bei den Sensoren und Bordcomputern, die für ein autonomes Fahren ausgerüstet sein können. Ein weiteres Einsatzgebiet für Anordnungen der genannten Art sind stationäre Energiespeicher.

Zur Ausgestaltung einer kompakten und kostengünstigen Anordnung für den Transport von Medien ist es bekannt, Funktionselemente direkt in den als Blasformteil ausgebildeten Grundkörper zu integrieren. Besteht eine strömungsleitende Verbindung zwischen Grundkörper und Funktionselement, ergeben sich dabei Probleme im Hinblick auf eine dauerhaft dichte Verbindung zwischen Grundkörper und Funktionselement. Ein weiteres Problem kann daraus resultieren, dass über das Funktionselement bzw. das an dem Funktionselement befestigten Bauteil eine mechanische Beanspruchung in die Anordnung eingebracht wird.

Der Erfindung liegt die Aufgabe zugrunde, eine Anordnung für eine Temperiereinrichtung bereitzustellen, die einfach und kostengünstig herstellbar ist und verbesserte Eigenschaften hinsichtlich der mechanischen Belastbarkeit aufweist.

Diese Aufgabe wird mit den Merkmalen von Anspruch 1 gelöst. Auf vorteilhafte Ausgestaltungen nehmen die Unteransprüche Bezug.

Die erfindungsgemäße Anordnung für eine Temperiereinrichtung umfasst zumindest einen blasgeformten Grundkörper und zumindest ein Funktionselement, wobei das Funktionselement stoffschlüssig mit dem Grundkörper verbunden ist, wobei das Funktionselement ein Verbundbauteil ist und zumindest einen ersten Bereich aus einem ersten Material mit ersten Werkstoffeigenschaften und einen zweiten Bereich aus einem zweiten Material mit zweiten Werkstoffeigenschaften aufweist.

Dabei unterscheidet sich das erste Material von dem zweiten Material, wobei das erste Material und das zweite Material so ausgewählt sind, dass diese jeweils für ihren Anwendungszweck optimiert sind. Gemäß einer vorteilhaften Ausgestaltung kann das erste Material für eine verbesserte Anbindung und das zweite Material für eine Verbesserung der mechanischen Eigenschaften, insbesondere einer erhöhten Festigkeit, ausgerüstet sein. Vorzugsweise ist das Funktionselement materialeinheitlich und einstückig ausgebildet. Prinzipiell können beide Materialien eine Basis aus demselben Werkstoff aufweisen, wobei das erste Material und das zweite Material mit unterschiedlichen Füllstoffen versehen sind und/oder das erste Material und das zweite Material Füllstoffe mit einem unterschiedlichen Füllstoffgehalt aufweisen.

Zwischen dem ersten Bereich und dem zweiten Bereich kann ein Übergangsbereich angeordnet sein, in welchem sich die Werkstoffeigenschaften allmählich ändern.

Alternativ kann der erste Bereich entlang einer Trennfläche von dem zweiten Bereich abgegrenzt sein.

Vorzugsweise ist das erste Material schweißbar ausgebildet, sodass das Funktionselement im Blasformverfahren während der Ausbildung des Grundkörpers an den Grundkörper stoffschlüssig angebunden werden kann. Zur Herstellung der Anordnung kann das vorgefertigte Funktionselement in der Blasform angeordnet werden und die stoffschlüssige Anbindung des Funktionselementes an den Grundkörper erfolgt während der Formgebung des Grundkörpers aus einem Vorformling.

Das zweite Material kann eine höhere Festigkeit aufweisen als das erste Material. Insbesondere kann das zweite Material einen höheren E-Modul aufweisen als das erste Material. Bei dieser Ausgestaltung ist vorteilhaft, dass der aus dem zweiten Material ausgebildete zweite Bereich geeignet ist, eine höhere mechanische Belastung aufzunehmen.

Das erste Material und das zweite Material sind vorzugsweise Kunststoffe. Dadurch ist das Funktionselement kostengünstig und einfach herstellbar und es ist möglich, die Anordnung, bestehend aus Grundkörper und Funktionselement, im Blasformverfahren einfach, kostengünstig und in wenigen Herstellungsschritten miteinander zu verbinden. Als Kunststoffe kommen insbesondere Polyolefine, bspw. Polypropylen oder Polyethylen, und/oder Polyamide in Betracht. Es ist dabei insbesondere denkbar, dass das erste Material einen ersten Kunststoff, bspw. Polypropylen, und das zweite Material einen zweiten Kunststoff, bspw. Polyamid, enthält. Das Funktionselement ist vorzugsweise materialeinheitlich und einstückig ausgebildet. Dabei kann das Funktionselement als Spritzgussteil ausgebildet sein, wobei das Funktionselement insbesondere auch als Zweikomponenten-Spritzgussteil ausgebildet sein kann. Dadurch ist die Herstellung kostengünstig. Alternativ kann das Funktionselement als Spritzgussteil ausgebildet sein, wobei zwischen dem ersten Bereich und dem zweiten Bereich ein Übergangsbereich angeordnet ist, in welchem das erste Material allmählich in das zweite Material übergeht.

Das erste Material und das zweite Material können eine Faserverstärkung aufweisen. Dabei kann die Faserverstärkung vorzugsweise aus Glasfasern gebildet sein. Durch die Faserverstärkung erhöht sich die mechanische Festigkeit des Funktionselementes, sodass das Funktionselement insbesondere geeignet ist, hohe mechanische Belastungen aufzunehmen. Bei dieser Ausgestaltung ist insbesondere denkbar, dass die Basiswerkstoffe von erstem Material und zweitem Material identisch sind und bspw. aus Polypropylen bestehen. Der Anteil der Faserverstärkung des ersten Materials kann sich aber von dem Anteil der Faserverstärkung des zweiten Materials unterscheiden. Der Anteil der Faserverstärkung kann sich dabei in einem zwischen dem ersten Bereich und dem zweiten Bereich angeordneten Übergangsbereich allmählich ändern. Alternativ kann der erste Bereich über eine Trennfläche von dem zweiten Bereich abgegrenzt sein. Prinzipiell ist auch denkbar, dass die Faserverstärkung metallische Fasern oder Kohlenstofffasern enthält.

Der Grundkörper und das Funktionselement können jeweils zumindest einen Strömungskanal aufweisen, wobei die Strömungskanäle von Grundkörper und Funktionselement über in den Grundkörper und das Funktionselement eingebrachte Öffnungen strömungsleitend in Verbindung stehen. Der Grundkörper und das Funktionselement sind vorzugsweise durch eine die Öffnung umgreifende stoffschlüssige Verbindung mediendicht miteinander verbunden.

Das Funktionselement kann dabei ausgebildet sein, ein Bauteil aufzunehmen. Dementsprechend kann das Funktionselement einen Adapter bilden, der stoffschlüssig an dem Grundkörper angebunden ist, wobei das Bauteil auswechselbar an dem Funktionselement befestigbar ist. Das Funktionselement kann mit Elementen für eine formschlüssige Anbindung des Bauteils versehen sein. Des Weiteren kann das Funktionselement mit Befestigungselementen, bspw. Durchgangslöchern für Schrauben, ausgerüstet sein. Dabei kann das Bauteil insbesondere als Pumpe ausgebildet sein. Eine erhöhte mechanische Beanspruchung entsteht einerseits durch die auswechselbare Befestigung der Pumpe, bspw. über Schraubverbindungen. Eine erhöhte mechanische Belastung ergibt sich aber auch durch den Pumpvorgang, bei welchem Temperiermedium über die Pumpe durch den Grundkörper gefördert wird. In alternativen Ausgestaltungen kann das Bauteil auch ein Sensor, ein Ventil oder eine Drossel sein.

Das erste Material kann einen kleineren Anteil Faserverstärkung aufweisen als das zweite Material. In diesem Zusammenhang ist es insbesondere denkbar, dass das erste Material zwischen 5 % und 20 % Faserverstärkung aufweist, während das zweite Material zwischen 30 % und 50 % Faserverstärkung aufweist. Durch den geringeren Anteil ist das erste Material schweißbar und weist durch den Anteil Faserverstärkung gleichzeitig eine verbesserte mechanische Stabilität auf. Das zweite Material ist durch den höheren Anteil Faserverstärkung zur Aufnahme besonders hoher mechanischer Belastungen geeignet. In dem Übergangsbereich kann sich der Anteil der Faserverstärkung allmählich von 5 % zu 50 % ändern.

Das Funktionselement kann an der dem Grundkörper zugewandten Fläche Schweißrippen aufweisen. Die Schweißrippen können die Öffnung des Funktionselementes konzentrisch umgeben und verbessern die stoffschlüssige und mediendichte Anbindung des Funktionselementes an den Grundkörper.

Die dem Grundkörper zugewandte Fläche ist vorzugsweise dem ersten Bereich zugeordnet. Bei dieser Ausgestaltung ist der erste Bereich mit dem ersten Material ausgerüstet, dieser ist schweißbar und dementsprechend ist es besonders einfach möglich, das Funktionselement stoffschlüssig mit dem Grundkörper zu verbinden.

Der Grundkörper kann eine Rohranordnung bilden und das Funktionselement ein Aufnahmeelement für eine Pumpe. Dabei kann die Anordnung eine Verteilstruktur als Bestandteil eines Temperierkreislaufs eines Elektrofahrzeugs bilden. Durch die erfindungsgemäße Ausgestaltung ist die Anordnung kompakt, kostengünstig herstellbar und weist eine hohe mechanische Stabilität auf.

Einige Ausgestaltungen der erfindungsgemäßen Anordnung werden nachfolgend anhand der Figuren näher erläutert. Die Figuren zeigen, jeweils schematisch:
- Fig. 1: eine Anordnung mit Grundkörper und zwei Funktionselementen in der Draufsicht;
- Fig. 2: das Funktionselement in perspektivischer Darstellung;
- Fig. 3: das Funktionselement im Schnitt.

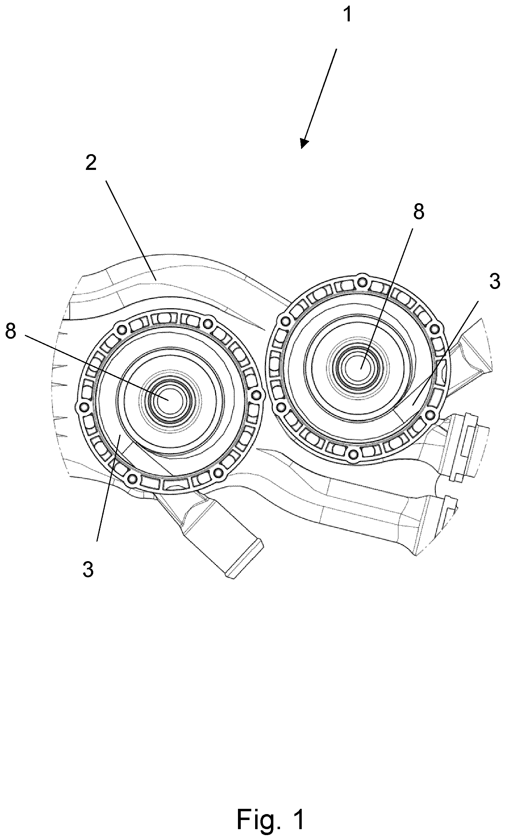

**Fig. 1** zeigt eine Anordnung 1 für den Transport von Medien. Bei der vorliegenden Ausgestaltung ist die Anordnung 1 eine Verteilstruktur, welche einen Bestandteil eines Temperierkreislaufs eines Elektrofahrzeugs bildet. Die Anordnung 1 dient dabei dem Transport und der Verteilung von Temperiermedien, bspw. Kühlmittel in Form von Kühlwasser. Insofern dient die Anordnung 1 dem Transport von Kühlmittel zu den zu temperierenden Komponenten des Elektrofahrzeugs, bspw. den Batterien, den Elektromotoren und der Leistungselektronik. In einer alternativen Ausgestaltung ist die Anordnung 1 Bestandteil eines stationären Energiespeichers.

Die Anordnung 1 umfasst einen als Blasformteil ausgebildeten Grundkörper 2 und ein Funktionselement 3, wobei das Funktionselement 3 stoffschlüssig mit dem Grundkörper 2 verbunden ist.

Bei der vorliegenden Ausgestaltung bildet das Funktionselement 3 eine als Adapter geformte Aufnahme für eine Pumpe. In alternativen Ausgestaltungen kann das Funktionselement 3 aber auch zur Aufnahme eines Kühlers, eines Sensors, eines Ventils oder eines Schlauchventils dienen.

Der Grundkörper 2 und das Funktionselement 3 umfassen einen Strömungskanal, wobei die Strömungskanäle des Grundkörpers 2 und Funktionselementes 3 über in den Grundkörper 2 und das Funktionselement 3 eingebrachte Öffnungen 8 miteinander in Verbindung stehen.

Die stoffschlüssige Verbindung von Grundkörper 2 und Funktionselement 3 ist derart ausgebildet, dass Grundkörper 2 und Funktionselement 3 mediendicht miteinander verbunden sind. Die stoffschlüssige Verbindung von Grundkörper 2 und Funktionselement 3 ist durch die Formgebung des Grundkörpers 2 während des Blasformens gebildet. Zur Herstellung der Anordnung 1 werden zunächst das Funktionselement 3 und ein aus polymerem Material bestehender Vorformling bereitgestellt und in einer Blasform angeordnet. Anschließend wird durch Blasformen aus dem Vorformling der Grundkörper 2 ausgeformt, wobei sich der Vorformling während der Ausformung an das Funktionselement 3 anlegt. Dabei kontaktiert der Vorformling die aus dem Funktionselement 3 ausgebildeten Schweißrippen 7. Die Schweißrippen 7 schmelzen auf und bewirken eine stoffschlüssige und mediendichte Verbindung von Grundkörper 2 und Funktionselement 3. Das Funktionselement 3 ist ein Verbundbauteil und weist einen ersten Bereich 4 aus einem ersten Material und einen zweiten Bereich 5 aus einem zweiten Material auf.

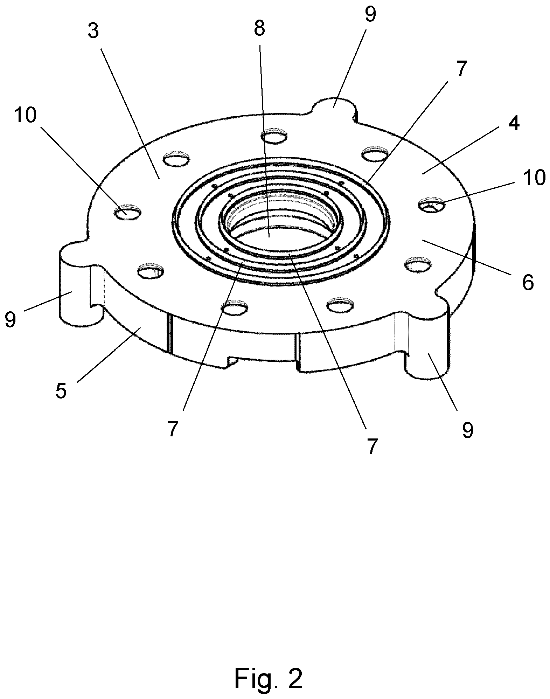

Die Schweißrippen 7 sind in **Fig. 2** zu erkennen. Dort ist gezeigt, dass das Funktionselement 3 an der dem Grundkörper 2 zugewandten Fläche 6 Schweißrippen 7 aufweist. Das Funktionselement 3 ist mit drei Schweißrippen 7 ausgerüstet, die die Öffnung 8 konzentrisch umgeben. In das Funktionselement 3 sind ferner Befestigungselemente 10 in Form von Durchgangslöchern eingebracht, sodass eine Pumpe mittels einer Schraubverbindung an dem Funktionselement 3 befestigt werden kann. Das Funktionselement 3 ist darüber hinaus mit Halteelementen 9 ausgerüstet, wobei die Halteelemente 9 zumindest abschnittsweise aus dem Material des zweiten Bereichs 5 ausgebildet sind, sodass die Halteelemente 9 eine besonders hohe mechanische Festigkeit, insbesondere einen verbesserten E-Modul, aufweisen.

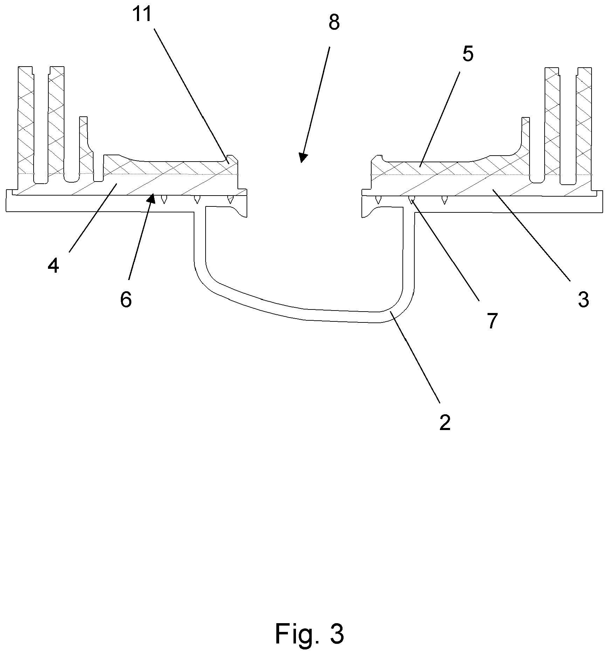

**Fig. 3** zeigt das Funktionselement 3 im Schnitt. Das Funktionselement 3 ist ein Verbundbauteil und weist einen ersten Bereich 4 aus einem ersten Material und einen zweiten Bereich 5 aus einem zweiten Material auf. Das erste Material und das zweite Material sind aus Kunststoff ausgebildet. Bei der vorliegenden Ausgestaltung bestehen das erste Material und das zweite Material aus demselben Basismaterial, hier aus Polypropylen. Das Funktionselement 3 ist ein Spritzgussteil und materialeinheitlich und einstückig ausgebildet. Das Funktionselement 3 weist auf der dem Grundkörper 2 abgewandten Seite einen Stutzen 11 auf, der der Aufnahme der Pumpe dient.

Das zweite Material des zweiten Bereichs 5 weist eine höhere Festigkeit auf als das erste Material des ersten Bereichs 4, insbesondere weist das zweite Material einen höheren E-Modul auf als das erste Material. Zur Erhöhung der mechanischen Festigkeit sind das erste Material und das zweite Material mit einer Faserverstärkung aus Glasfasern ausgerüstet, wobei das erste Material einen geringeren Anteil Faserverstärkung aufweist als das zweite Material. Bei der vorliegenden Ausgestaltung umfasst das erste Material einen Anteil von 10 % Faserverstärkung und das zweite Material einen Anteil von 30 % Faserverstärkung. Bei dieser Ausgestaltung ist der erste Bereich 4 aus dem ersten Material mit geringerem Anteil Faserverstärkung schweißbar und der zweite Bereich 5 aus dem zweiten Material mit höherem Anteil Faserverstärkung weist einen höheren E-Modul auf.

Gemäß einer ersten Ausgestaltung ist der erste Bereich 4 durch eine Trennfläche von dem zweiten Bereich 5 abgegrenzt. Diese Ausgestaltung kann durch Herstellung des Funktionselementes 3 im Zweikomponentenspritzguss erzielt werden. Gemäß einer zweiten Ausgestaltung ist zwischen dem ersten Bereich 4 und dem zweiten Bereich 5 ein Übergangsbereich angeordnet, in welchem sich der Anteil der Faserverstärkung allmählich von 10 % auf 30 % ändert. Diese Ausgestaltung kann durch Herstellung des Funktionselementes 3 im Spritzgussverfahren mit mehreren Angüssen erzielt werden. In beiden Fällen ist das Funktionselement 3 materialeinheitlich und einstückig ausgebildet.

Dem ersten Bereich 4 ist die dem Grundkörper 2 zugewandte und mit den Schweißrippen 7 versehene Fläche 6 zugeordnet. Das Funktionselement 3 ist stoffschlüssig mit dem Grundkörper 2 verbunden, wobei sich das Material von Funktionselement 3 und Grundkörper 2 zumindest im Bereich der Schweißrippen 7 durchdringen, sodass die Verbindung von Funktionselement 3 und Grundkörper 2 zumindest im Bereich der Öffnung 8 mediendicht ist.

## Patentansprüche

1. Anordnung (1) für eine Temperiereinrichtung, umfassend zumindest einen blasgeformten Grundkörper (2) und zumindest ein Funktionselement (3), wobei das Funktionselement (3) stoffschlüssig mit dem Grundkörper (2) verbunden ist, **dadurch gekennzeichnet, dass** das Funktionselement (3) ein Verbundbauteil ist und zumindest einen ersten Bereich (4) aus einem ersten Material und einen zweiten Bereich (5) aus einem zweiten Material aufweist.

2. Anordnung nach Anspruch 1, **dadurch gekennzeichnet, dass** das erste Material schweißbar ist.

3. Anordnung nach Anspruch 1 oder 2, **dadurch gekennzeichnet, dass** das zweite Material eine höhere Festigkeit aufweist als das erste Material.

4. Anordnung nach einem der Ansprüche 1 bis 3, **dadurch gekennzeichnet, dass** das erste Material und das zweite Material Kunststoffe sind.

5. Anordnung nach einem der Ansprüche 1 bis 4, **dadurch gekennzeichnet, dass** das erste Material und das zweite Material eine Faserverstärkung aufweisen.

6. Anordnung nach Anspruch 5, **dadurch gekennzeichnet, dass** die Faserverstärkung aus Glasfasern ausgebildet ist.

7. Anordnung nach Anspruch 5 oder 6, **dadurch gekennzeichnet, dass** das erste Material einen geringeren Anteil Faserverstärkung aufweist als das zweite Material.

8. Anordnung nach einem der Ansprüche 1 bis 7, **dadurch gekennzeichnet, dass** das Funktionselement (3) an der dem Grundkörper (2) zugewandten Fläche (6) Schweißrippen (7) aufweist.

9. Anordnung nach Anspruch 8, **dadurch gekennzeichnet, dass** die dem Grundkörper (2) zugewandte Fläche (6) dem ersten Bereich (4) zugeordnet ist.

10. Anordnung nach einem der Ansprüche 1 bis 9, **dadurch gekennzeichnet, dass** der Grundkörper (2) eine Rohranordnung und das Funktionselement (3) ein Aufnahmeelement für ein Bauteil bilden.
